# EUROPEAN PATENT APPLICATION

(11) **EP 4 804 689 A1**
(43) Date of publication of application: **09.09.2026**
(21) Application number: 24896427.2
(22) Date of filing: 22.11.2024
(51) Int. Cl.: H04W 72/231

(54) **DOWNLINK TRANSMISSION CONTROL METHOD, NETWORK DEVICE, TERMINAL, STORAGE MEDIUM, AND COMPUTER PROGRAM PRODUCT**

(30) Priority: 01.12.2023 CN 202311641016
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Yuzhen, Beijing 100053 (CN); CHAI, Li, Beijing 100053 (CN)
(74) Representative: J A Kemp LLP
(86) International application number: PCT/CN2024/133774
(87) International publication number: WO 2025/113336

(57) **Abstract**

Disclosed in embodiments of the present application are a downlink transmission control method, a network device, a terminal, a storage medium, and a computer program product. The method applied to a network device comprises: configuring the number of repetitions of downlink transmission for a terminal on the basis of first information, wherein the first information comprises satellite beam information and/or first auxiliary information reported by the terminal; and/or adjusting a downlink frequency division strategy on the basis of second information, wherein the second information comprises at least one of the following: the number of satellite beams, a power limitation requirement, and second auxiliary information reported by the terminal.

## Description

### CROSS-REFERENCE TO RELATED APPLICATION

This application is based on and claims priority to Chinese patent application No. 202311641016.6, filed on Dec. 01, 2023, and entitled "DOWNLINK TRANSMISSION CONTROL METHOD, NETWORK DEVICE, TERMINAL, AND STORAGE MEDIA", the disclosure of which is hereby incorporated by reference in its entirety.

### TECHNICAL FIELD

Embodiments of the disclosure relate to the technical field of wireless communications, and in particular to a method for controlling downlink transmission, a network device, a terminal, a storage medium, and a computer program product.

### BACKGROUND

At present, enhancement design has been carried out in communication standards for a problem of poor uplink coverage of a non-terrestrial network (NTN). However, in scenarios such as a satellite with multiple satellite beams or limited power, a downlink transmit power of the satellite will be affected, and there is also a problem of poor downlink coverage, which easily leads to low success rate of downlink data reception.

### SUMMARY

The embodiments of the disclosure provide a method for controlling downlink transmission, a network device, a terminal, a storage medium and a computer program product, which enhances the downlink coverage of the NTN and improves the success rate of downlink data reception.

The technical solution in the embodiments of the disclosure is implemented as follows.

An embodiment of the disclosure provides a method for controlling downlink transmission, which is applied to a network device and includes the following operations.

A number of repetitions for downlink transmission is configured for a terminal based on first information. The first information includes satellite beam information and/or first auxiliary information reported by the terminal.

And/or, a downlink frequency division strategy is adjusted based on second information. The second information includes at least one of: a number of satellite beams, a power limitation requirement, or second auxiliary information reported by the terminal.

In the above method, the operation of configuring the number of repetitions for the downlink transmission for the terminal based on the first information may include the following actions.

N sets of numbers of repetitions are determined based on the satellite beam information and/or the first auxiliary information, N being a natural number greater than or equal to 1. Each of the N sets of numbers of repetitions includes a number of repetitions for at least one downlink transmission determined by at least one piece of information included in the satellite beam information and/or the first auxiliary information.

When N is equal to 1, a number of repetitions for a downlink transmission is selected from the determined set of numbers of repetitions and configured for the terminal.

When N is greater than 1, an intersection of the N sets of numbers of repetitions is determined.

When the intersection is a non-empty set, a number of repetitions for a downlink transmission is selected from the intersection and configured for the terminal.

When the intersection is an empty set, a number of repetitions for a next transmission is selected from the N sets of numbers of repetitions and configured for the terminal.

In the above method, the satellite beam information includes at least one of: the number of satellite beams, a transmit power allocated to each satellite beam, or a coverage area of a satellite beam that covers the terminal.

In the above method, when the transmit power allocated to each satellite beam is the same, the number of repetitions for the downlink transmission satisfies at least one of the following conditions: positively correlated with a distance from a first beam reference point to a second beam reference point, the first beam reference point being a reference point of the satellite beam that covers the terminal, the second beam reference point being a reference point of a central satellite beam, and the central satellite beam being a satellite beam in a vertical direction of a satellite; positively correlated with the number of satellite beams; or positively correlated with the coverage area of the satellite beam that covers the terminal.

In the above method, when the transmit power allocated to at least one satellite beam is different from that allocated to other satellite beams, the number of repetitions for the downlink transmission is negatively correlated with the transmit power of the satellite beam that covers the terminal.

In the above method, the first auxiliary information includes at least one of: a communication environment of the terminal, a distance between the terminal and an edge of beam coverage, a terminal capability of the terminal, or an importance level of data expected to be received by the terminal.

In the above method, the number of repetitions for the downlink transmission satisfies at least one of the following conditions: negatively correlated with the communication environment of the terminal; negatively correlated with the distance between the terminal and the edge of beam coverage; negatively correlated with the terminal capability of the terminal; or positively correlated with the importance level of the data expected to be received by the terminal.

In the above method, the following operation may be included.

The number of repetitions for the downlink transmission is updated for the terminal when a cell corresponding to the terminal changes.

In the above method, the operation of updating the number of repetitions for the downlink transmission for the terminal may include at least one of the following actions.

The number of repetitions for the downlink transmission is updated for the terminal based on a change in a transmit power of a satellite beam that covers the terminal and/or a change in a distance from a central satellite beam before and after a cell change, when a change of a satellite beam under the same satellite causes the cell corresponding to the terminal to change.

The number of repetitions for the downlink transmission is updated for the terminal based on a change in a satellite orbit height and/or a change in a satellite service area before and after a cell change, when a change of a satellite causes the cell corresponding to the terminal to change.

The number of repetitions for the downlink transmission is updated for the terminal based on cell change information reported by the terminal, when a movement of the terminal causes the cell corresponding to the terminal to change.

In the above method, the cell change corresponding to the terminal includes a cell handover, and the terminal resides in a first cell before the cell handover and resides in a second cell after the cell handover.

The cell change information includes at least one of: cell identifiers respectively corresponding to the first cell and the second cell; satellite identification information respectively corresponding to the first cell and the second cell; or beam information respectively corresponding to the first cell and the second cell.

In the above method, the number of repetitions for the downlink transmission is configured for the terminal through at least one of: a broadcast message, downlink control information (DCI), radio resource control (RRC) signaling, or a media access control (MAC) control element.

In the above method, the following operation may be included.

The number of repetitions for the downlink transmission is updated for the terminal based on at least one of: change information of a satellite beam, including at least one of a change in a moving speed of the satellite beam or a change in a coverage area of the satellite beam; an update request from the terminal; change information of a network node; or service duration information of a satellite and/or the satellite beam.

In the above method, the second auxiliary information may include at least one of: an actual received power; or information on a monitored idle frequency band in which a signal quality is greater than a threshold during a first time period, including at least one of a start frequency, an end frequency, a spacing, or a data packet reception status.

In the above method, the following operation may be included.

An effective usage duration corresponding to the number of repetitions for the downlink transmission is configured for the terminal.

An embodiment of the disclosure provides a method for controlling downlink transmission, which is applied to a terminal and includes the following operations.

A number of repetitions for downlink transmission configured by a network device based on first information is received. The first information includes satellite beam information and/or first auxiliary information reported by the terminal.

And/or second auxiliary information is reported to the network device for the network device to adjust a downlink frequency division strategy.

In the above method, the satellite beam information includes at least one of: a number of satellite beams, a transmit power allocated to each satellite beam, or a coverage area of a satellite beam that covers the terminal.

In the above method, the first auxiliary information includes at least one of: a communication environment of the terminal, a distance between the terminal and an edge of beam coverage, a terminal capability of the terminal, or an importance level of data expected to be received by the terminal.

In the above method, the second auxiliary information may include at least one of: an actual received power; or information on a monitored idle frequency band in which a signal quality is greater than a threshold during a first time period, including at least one of a start frequency, an end frequency, a spacing, or a data packet reception status.

In the above method, at least one of the following operations may be included.

A first response is transmitted to the network device to instruct the network device to stop repeatedly transmitting downlink data, when the downlink data is received before a number of receptions reaches the configured number of repetitions.

A second response is transmitted to the network device to indicate to the network device that downlink data has been received, in response to the downlink data being received when a number of receptions reaches the configured number of repetitions.

A third response is transmitted to the network device to indicate to the network device that downlink data has not been received, when the downlink data is not successfully received after the configured number of repetitions has been reached.

An embodiment of the disclosure provides a network device, including: a first processor, a first memory, and a first communication bus.

The first communication bus is configured to implement a communication connection between the first processor and the first memory.

The first processor is configured to execute one or more computer programs stored in the first memory to implement the method for controlling downlink transmission applied to the network device.

An embodiment of the disclosure provides a terminal, including: a second processor, a second memory, and a second communication bus.

The second communication bus is configured to implement a communication connection between the second processor and the second memory.

The second processor is configured to execute one or more computer programs stored in the second memory to implement the method for controlling downlink transmission applied to the terminal.

An embodiment of the disclosure provides a computer-readable storage medium in which a computer program is stored, and when the computer program is executed, the operations of the method for controlling downlink transmission applied to the network device or the operations of the method for controlling downlink transmission applied to the terminal are implemented.

An embodiment of the disclosure provides a computer program product, including a computer program that, when executed by a processor, causes the processor to implement operations of the method for controlling downlink transmission applied to the network device or operations of the method for controlling downlink transmission applied to the terminal.

The embodiments of the disclosure provide a method for controlling downlink transmission, a network device, a terminal, a storage medium and a computer program product. The method applied to the network device includes: configuring the number of repetitions for downlink transmission for the terminal based on the first information, the first information including the satellite beam information and/or the first auxiliary information reported by the terminal; and/or adjusting a downlink frequency division strategy based on the second information. The second information includes at least one of: the number of satellite beams, the power limitation requirement, or the second auxiliary information reported by the terminal. According to the technical solution provided by the embodiments of the disclosure, the network device can configure the number of repetitions for the downlink transmission for the terminal, so that the terminal can repeatedly attempt to receive downlink data, thereby improving the success rate of downlink data reception. In addition, frequency division multiplexing can be enhanced by adjusting the downlink frequency division strategy, to ensure reliability of the downlink transmission and further improve the success rate of the downlink data reception. In summary, the technical solution provided in the disclosure enhances downlink coverage in the NTN and improve the success rate of downlink data reception.

### BRIEF DESCRIPTION OF THE DRAWINGS

FIG. 1 is a first schematic flowchart of a method for controlling downlink transmission provided by an embodiment of the disclosure.
FIG. 2 is a schematic diagram of an exemplary multi-beam scenario provided by an embodiment of the disclosure.
FIG. 3 is a schematic diagram of an exemplary information configuration provided by an embodiment of the disclosure.
FIG. 4 is a schematic flowchart of an exemplary adjustment of a downlink frequency division strategy provided by an embodiment of the disclosure.
FIG. 5 is a second schematic flowchart of a method for controlling downlink transmission provided by an embodiment of the disclosure.
FIG. 6 is a first schematic structural diagram of a network device provided by an embodiment of the disclosure.
FIG. 7 is a second schematic structural diagram of a network device provided by an embodiment of the disclosure.
FIG. 8 is a first schematic structural diagram of a terminal provided by an embodiment of the disclosure.
FIG. 9 is a second schematic structural diagram of a terminal provided by an embodiment of the disclosure.

### DETAILED DESCRIPTION

In order to make the object, technical solutions, and advantages of the disclosure clearer, the disclosure will be further described in detail below with reference to the accompanying drawings and embodiments. It is to be understood that the specific embodiments described herein are merely intended to explain the disclosure and are not intended to limit the disclosure.

Hereinafter, the technical solutions of the disclosure and how the technical solution of the disclosure solves the above-mentioned technical problem will be specifically described in detail through the embodiments in combination with the accompanying drawings. The following embodiments may be combined with one another, and the same or similar concepts or processes may not be described again in certain embodiments.

In addition, unless otherwise conflicting, any combination of the technical solutions described in the embodiments of the disclosure is possible.

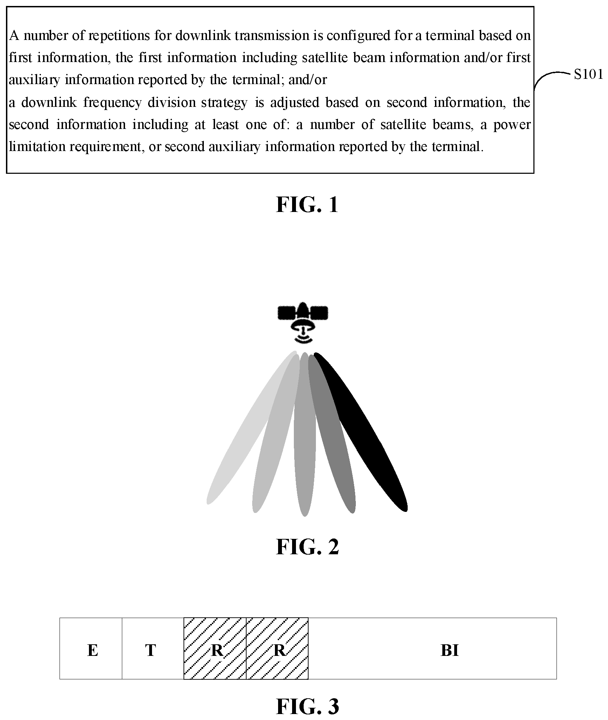

An embodiment of the disclosure provides a method for controlling downlink transmission, which is applied to a network device. FIG. 1 is a first schematic flowchart of a method for controlling downlink transmission provided by an embodiment of the disclosure. As shown in FIG. 1, in the embodiment of the disclosure, the method for controlling downlink transmission applied to the network device mainly includes the following operations.

At S101, a number of repetitions for downlink transmission is configured for a terminal based on the first information. The first information includes satellite beam information and/or first auxiliary information reported by the terminal.

And/or, a downlink frequency division strategy is adjusted based on second information. The second information includes at least one of: a number of satellite beams, a power limitation requirement, or second auxiliary information reported by the terminal.

In the embodiment of the disclosure, in a multi-beam scenario as shown in FIG. 2, the network device can configure the number of repetitions for the downlink transmission for the terminal, so that the terminal can repeatedly attempt to receive downlink data, thereby improving the success rate of downlink data reception. In addition, in a power limited scenario, the network device can enhance frequency division multiplexing by adjusting the downlink frequency division strategy, to ensure reliability of the downlink transmission and further improve the success rate of the downlink data reception. A specific method for improving the success rate of downlink data reception adopted by the network device may be selected according to an actual application scenario and demand, which is not limited in the embodiment of the disclosure.

Hereinafter, a scheme in which the network device configures the number of repetitions for the downlink transmission for the terminal based on the first information will be described in detail.

In an embodiment of the disclosure, the first information includes the satellite beam information and/or the first auxiliary information, and the satellite beam information includes at least one of: a number of satellite beams, a transmit power allocated to each satellite beam, or a coverage area of a satellite beam that covers the terminal.

It should be noted that, in the embodiment of the disclosure, the satellite beam information may include not only at least one of the above three pieces of information, but also other characteristic information related to the satellite beam, which is not limited in the embodiment of the disclosure.

In the embodiment of the disclosure, considering the satellite beam information, the network device may determine the number of repetitions for the downlink transmission for the terminal based on the following principles.

In a first case, when the transmit power allocated to each satellite beam is the same, the number of repetitions for the downlink transmission satisfies at least one of the following conditions: positively correlated with a distance from a first beam reference point to a second beam reference point, the first beam reference point being a reference point of the satellite beam that covers the terminal, the second beam reference point being a reference point of a central satellite beam, and the central satellite beam being a satellite beam in a vertical direction of a satellite; positively correlated with the number of satellite beams; or positively correlated with the coverage area of the satellite beam that covers the terminal.

In a second case, when the transmit power allocated to at least one satellite beam is different from that allocated to other satellite beams, the number of repetitions for the downlink transmission is negatively correlated with the transmit power of the satellite beam that covers the terminal.

Illustratively, in an embodiment of the disclosure, the network device configures the number of repetitions being a for a terminal covered by the central satellite beam, and the number of repetitions being b for a terminal covered by another satellite beam that is n km away from the central satellite beam, and b is proportional to the distance between the satellite beam and the central satellite beam, for example, b = a + n*x, and x represents a rate of change of the number of repetitions per unit distance (e.g., 1 km).

For example, in the embodiment of the disclosure, the network device uniformly distributes transmit power for each satellite beam, and at this time, the number of repetitions for the downlink transmission is configured for the terminal based on a size of the coverage area of the satellite beam. For example, a coverage radius of a certain satellite beam is d1 km, and the network device configures a number of repetitions for a terminal covered by the satellite beam as a1. For a satellite beam with a coverage radius of d2 km (assuming d2 > d1), a number a2 of repetitions configured by the network device for a terminal covered by the satellite beam will be larger, a2 = a1+ (d2-d1) *m, and m represents a rate of change of the number of repetitions per unit coverage radius (e.g., 1 km).

In an embodiment of the disclosure, the first information includes the satellite beam information and/or the first auxiliary information, and the first auxiliary information includes at least one of: a communication environment of the terminal, a distance between the terminal and an edge of beam coverage, a terminal capability of the terminal, or an importance level of data expected to be received by the terminal.

It should be noted that, in the embodiment of the disclosure, considering that there is a difference in terminal capability between different types of terminals, for example, an ordinary terminal, a lightweight terminal, and an internet of things terminal, the terminal capability of the terminal may be specifically represented by the terminal type, that is, the terminal capability may be indicated by the terminal type.

It should be noted that, in the embodiment of the disclosure, the first auxiliary information may include not only at least one of the above four pieces of information, but also other characteristic information related to the terminal, which is not limited in the embodiment of the disclosure.

In the embodiment of the disclosure, considering the first auxiliary information reported by the terminal, the number of repetitions for the downlink transmission determined by the network device for the terminal may satisfy at least one of the following conditions based on the following principles. The number of repetitions for the downlink transmission is: negatively correlated with the communication environment of the terminal; negatively correlated with the distance between the terminal and the edge of beam coverage; negatively correlated with the terminal capability of the terminal; and/or positively correlated with the importance level of the data expected to be received by the terminal.

It will be appreciated that in the embodiment of the disclosure, the worse the communication environment of the terminal is (for example, there is a forest obscured by trees in the communication environment), the greater the configured number of repetitions for the downlink transmission is. The communication environment of the terminal may be determined by the terminal based on its own position information, and may be indicated in the form of an index, for example, 00 corresponds to an ocean, 01 corresponds to a forest, 02 corresponds to a desert, or the like. A specific correspondence between the index and the communication environment may be deployed in advance in the terminal or specified in the form of a table or an information element in a protocol.

It will be appreciated that in the embodiment of the disclosure, the lower the terminal capability of the terminal is, that is, the lower the terminal type level is, the greater the configured number of repetitions for the downlink transmission is.

It will be appreciated that in the embodiment of the disclosure, the greater the distance between the terminal and the edge of beam coverage is, that is, the closer the terminal is to the edge of beam coverage, the greater the configured number of repetitions for the downlink transmission is.

It will be appreciated that in the embodiment of the disclosure, the higher the importance level of the data expected to be received by the terminal is, the greater the configured number of repetitions for the downlink transmission is, in order for the data to reach the terminal as quickly and successfully as possible.

It should be noted that, in the embodiment of the disclosure, the satellite beam information and the first auxiliary information each includes at least one piece of information, and different information may affect the configured number of repetitions for the downlink transmission from different dimensions. Based on this, the number of repetitions for the downlink transmission may be finally determined by considering different combinations of these pieces of information.

In an embodiment of the disclosure, the operation of configuring the number of repetitions for the downlink transmission for the terminal by the network device based on the first information may include the following actions. N sets of numbers of repetitions are determined based on the satellite beam information and/or the first auxiliary information, N being a natural number greater than or equal to 1. Each of the N sets of numbers of repetitions includes a number of repetitions for at least one downlink transmission determined by at least one piece of information included in the satellite beam information and/or the first auxiliary information. When N is equal to 1, a number of repetitions for a downlink transmission is selected from the determined set of numbers of repetitions and configured for the terminal. When N is greater than 1, an intersection of the N sets of numbers of repetitions is determined. When the intersection is a non-empty set, a number of repetitions for a downlink transmission is selected from the intersection and configured for the terminal. When the intersection is an empty set, a number of repetitions for a next transmission is selected from the N sets of numbers of repetitions and configured for the terminal.

It should be noted that, in the embodiment of the disclosure, the number of repetitions for at least one downlink transmission included in each set of numbers of repetitions may be selectively determined by one or more pieces of information. The number of repetitions for the downlink transmission in the same set of numbers of repetitions may be determined by the same information based on different rules, or may be determined by different information, and the specific N sets of numbers of repetitions are not limited in the embodiment of the disclosure.

It will be appreciated that in the embodiment of the disclosure, when the number of the determined sets of numbers of repetitions is one, that is, when N is equal to 1, the network device may directly select a number of repetitions for a downlink transmission therefrom and configure it for the terminal, and the specific selection rule may be based on priorities of various pieces of information used for determining the number of repetitions for the downlink transmission. For example, the set of numbers of repetitions determined by the network device is {1, 2, 3}, and the information used for determining the number of repetitions being 2 has the highest priority, so the number of repetitions for the downlink transmission configured for the terminal is selected to be 2. The specific selection rule may be set according to actual needs and application scenarios, and is not limited by the embodiments of the disclosure.

It will be appreciated that in the embodiment of the disclosure, when the number of the determined sets of numbers of repetitions is multiple, that is, when N is greater than 1, the network device may select a number of repetitions for a downlink transmission from the intersection of the N sets of numbers of repetitions and configure it for the terminal, so as to ensure that a better number of repetitions for the downlink transmission is configured for the terminal by taking into account factors from multiple dimensions to the greatest extent. If the intersection is empty, the network device may directly select a number of repetitions for a downlink transmission from the N sets of numbers of repetitions and configure it for the terminal, and the specific selection rule may be set according to actual needs and application scenarios, which is not limited by the embodiments of the disclosure.

In the embodiment of the disclosure, due to the fact that a satellite moves at high speed, a cell may change frequently, or the terminal may move to a different cell, especially the terminal and the satellite or the satellite beam may move in opposite directions. Considering the influence of the cell change, the network device may also update the number of repetitions for the downlink transmission for the terminal when a cell corresponding to the terminal changes.

In an embodiment of the disclosure, the network device updates the number of repetitions for the downlink transmission for the terminal, including at least one of the following operations. The number of repetitions for the downlink transmission is updated for the terminal based on a change in a transmit power of a satellite beam that covers the terminal and/or a change in a distance from a central satellite beam before and after a cell change, when a change of a satellite beam under the same satellite causes the cell corresponding to the terminal to change. The number of repetitions for the downlink transmission is updated for the terminal based on a change in a satellite orbit height and/or a change in a satellite service area before and after a cell change, when a change of a satellite causes the cell corresponding to the terminal to change. The number of repetitions for the downlink transmission is updated for the terminal based on cell change information reported by the terminal, when a movement of the terminal causes the cell corresponding to the terminal to change.

It should be noted that, in the embodiment of the disclosure, in case that a change of the satellite beam under the same satellite causes the cell corresponding to the terminal to change, if the transmit power allocated to the satellite beam that covers the terminal after the cell change is lower and/or the distance from the central satellite beam is farther, the number of repetitions for the downlink transmission may be increased; otherwise, the number of repetitions for the downlink transmission may be reduced.

It should be noted that, in the embodiment of the disclosure, in case that a change of the satellite causes the cell corresponding to the terminal to change, if the satellite orbit height becomes a higher orbit than before, the number of repetitions for the downlink transmission may be increased, or if the satellite orbit height does not change, but a distance from a previous service area is farther, the number of repetitions for the downlink transmission may also be increased; otherwise, the number of repetitions for the downlink transmission may be reduced.

It should be noted that, in the embodiment of the disclosure, the cell change corresponding to the terminal includes a cell handover, and the terminal resides in a first cell before the cell handover and resides in a second cell after the cell handover. The network device may update the number of repetitions for the downlink transmission for the terminal based on the cell change information reported by the terminal. The cell change information reported by the terminal includes at least one of: cell identifiers respectively corresponding to the first cell and the second cell; satellite identification information respectively corresponding to the first cell and the second cell; or beam information respectively corresponding to the first cell and the second cell.

In the embodiment of the disclosure, the network device may further update the number of repetitions for the downlink transmission for the terminal based on at least one of: change information of a satellite beam, including at least one of a change in a moving speed of the satellite beam or a change in a coverage area of the satellite beam; an update request from the terminal; change information of a network node; or service duration information of a satellite and/or the satellite beam.

It should be noted that, in the embodiment of the disclosure, the network device may not only update the number of repetitions for the downlink transmission for the terminal based on at least one piece of the above information, but also may update it based on characteristic information of other networks or terminals, which is not limited in the embodiment of the disclosure.

In the embodiment of the disclosure, the network device configures the number of repetitions for the downlink transmission for the terminal through at least one of: a broadcast message, DCI, RRC signaling; or an MAC control element.

It should be noted that, in the embodiment of the disclosure, the network device may not only configure the number of repetitions for the downlink transmission for the terminal, but also may configure an effective usage duration corresponding to the number of repetitions for the downlink transmission for the terminal, and specifically, these may be configured simultaneously using the same method.

It will be appreciated that, in the embodiment of the disclosure, when the network device updates the number of repetitions for the downlink transmission for the terminal, the network device actually reconfigures the number of repetitions for the downlink transmission for the terminal, with the configuration being implemented using at least one of the aforementioned methods.

It should be noted that, in the embodiment of the disclosure, the network device may initially configure the number of repetitions for downlink transmission for all terminals in the cell through a broadcast message, and update the number of repetitions for downlink transmission through a dedicated signaling message after entering a connected state.

It should be noted that, in the embodiment of the disclosure, for a message (Msg) in a communication protocol, for example, Msg2/MsgB/Msg4, the network device carries the number of repetitions for downlink transmission in a corresponding MAC control element or in DCI scheduling Msg2/MsgB/Msg4 to configure it for the terminal.

Illustratively, in the embodiment of the disclosure, the number of repetitions for the downlink transmission and/or the effective duration corresponding to the number of repetitions may be carried in the broadcast message or the DCI scheduling Msg2/MsgB and configured for the terminal, and the existing R bit may be utilized.

Illustratively, in the embodiment of the disclosure, as shown in FIG. 3, the number of repetitions for the downlink transmission may be carried in the MAC control element corresponding to the Msg4 and configured for the terminal. Specifically, two R bits may be utilized, one for indicating the number of repetitions for the downlink transmission, and the other for indicating the corresponding effective usage duration.

Hereinafter, a scheme in which the network device adjusts the downlink frequency division strategy based on the second information will be described in detail.

It should be noted that in the power-limited scenario, the scheme in which the number of repetitions for the downlink transmission is configured may strengthen interference, and fails to meet a power flux-density (PFD) limit requirement. Based on this, frequency division multiplexing enhancement may be considered to improve the success rate of downlink data reception.

In an embodiment of the disclosure, the second information includes at least one of: a number of satellite beams, a power limitation requirement, or second auxiliary information reported by the terminal. The second auxiliary information includes at least one of: an actual received power; or information on a monitored idle frequency band in which a signal quality is greater than a threshold during a first time period, including at least one of a start frequency, an end frequency, a spacing, or a data packet reception status.

It should be noted that, in the embodiment of the disclosure, the threshold for evaluating the signal quality in the first time period may be configured by the network device, and may be configured based on a service type, a quality of service (QoS) requirement, or the like, which is not limited in the embodiment of the disclosure.

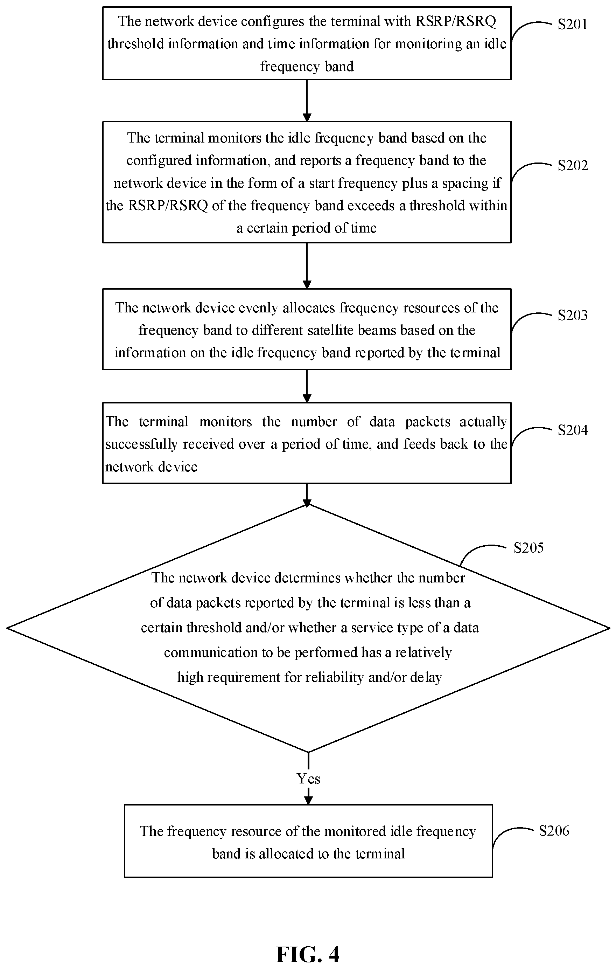

FIG. 4 is a schematic flowchart of an exemplary adjustment of a downlink frequency division strategy according to an embodiment of the disclosure. As shown in FIG. 4, it mainly includes the following operations.

At S201, the network device configures the terminal with reference signal received power (RSRP)/reference signal received quality (RSRQ) threshold information and time information for monitoring an idle frequency band.

At S202, the terminal monitors the idle frequency band based on the configured information, and reports a frequency band to the network device in the form of a start frequency plus a spacing if the RSRP/RSRQ of the frequency band exceeds the threshold within a certain period of time.

At S203, the network device evenly allocates frequency resources of the frequency band to different satellite beams based on the information on the idle frequency band reported by the terminal.

At S204, the terminal monitors the number of data packets actually successfully received over a period of time, and feeds back to the network device.

At S205, the network device determines whether the number of data packets reported by the terminal is less than a certain threshold and/or whether a service type of a data communication to be performed has a relatively high requirement for reliability and/or delay, and if the determination result is yes, proceed to operation S206.

At S206, the frequency resource of the monitored idle frequency band is allocated for the terminal.

It should be noted that, in the embodiment of the disclosure, the flow shown in FIG. 4 is only an exemplary way of adjusting the downlink frequency division strategy based on the second auxiliary information, and the network device may also adjust the downlink frequency division strategy by other rules or ways based on the second auxiliary information, which is not limited in the embodiment of the disclosure.

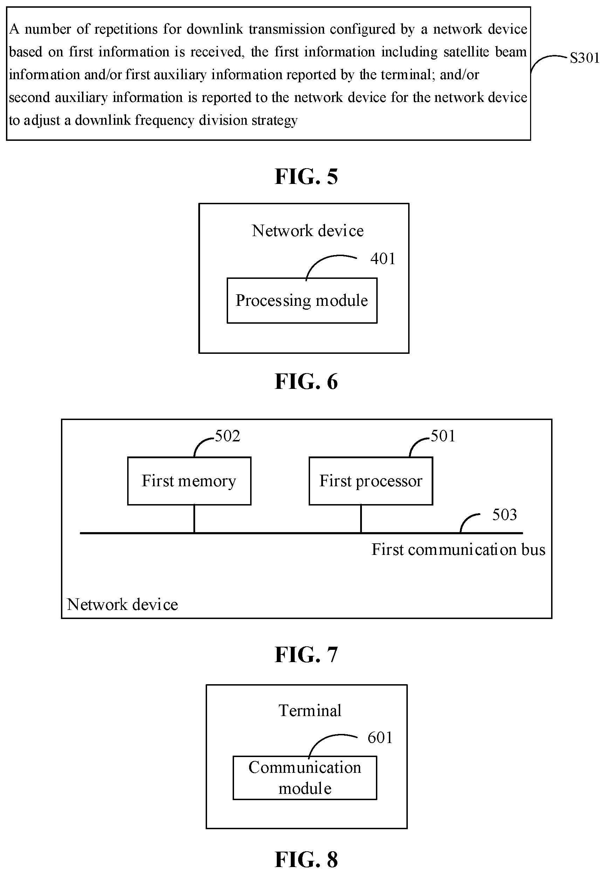

An embodiment of the disclosure further provides a method for controlling downlink transmission, which is applied to a terminal. FIG. 5 is a second schematic flowchart of a method for controlling downlink transmission provided by an embodiment of the disclosure. As shown in FIG. 5, the method for controlling downlink transmission applied to the terminal mainly includes the following operations.

At S301, a number of repetitions for downlink transmission configured by a network device based on first information is received. The first information includes satellite beam information and/or first auxiliary information reported by the terminal.

And/or second auxiliary information is reported to the network device for the network device to adjust a downlink frequency division strategy.

In the embodiment of the disclosure, corresponding to the method for controlling downlink transmission applied to the network device, the terminal receives the number of repetitions for the downlink transmission configured by the network device, so that the terminal can repeatedly attempt to receive downlink data, thereby improving the success rate of downlink data reception. In addition, the terminal may report the second auxiliary information to the network device, so that the network device can enhance the frequency division multiplexing by adjusting the downlink frequency division strategy, to improve reliability of the downlink transmission and further improve the success rate of the downlink data reception.

In an embodiment of the disclosure, the satellite beam information includes at least one: a number of satellite beams, a transmit power allocated to each satellite beam, or a coverage area of a satellite beam that covers the terminal.

In an embodiment of the disclosure, the first auxiliary information includes at least one of: a communication environment of the terminal, a distance between the terminal and an edge of beam coverage, a terminal capability of the terminal, or an importance level of data expected to be received by the terminal.

In an embodiment of the disclosure, after receiving the number of repetitions for the downlink transmission configured by the network device, the terminal may perform at least one of the following operations. A first response is transmitted to the network device to instruct the network device to stop repeatedly transmitting downlink data, when the downlink data is received before a number of receptions reaches the configured number of repetitions. A second response is transmitted to the network device to indicate to the network device that downlink data has been received, in response to the downlink data being received when a number of receptions reaches the configured number of repetitions. A third response is transmitted to the network device to indicate to the network device that downlink data has not been received, when the downlink data is not successfully received after the configured number of repetitions has been reached.

It will be appreciated that, in the embodiment of the disclosure, when the terminal receives the downlink data before the number of receptions reaches the configured number of repetitions, the terminal may promptly instruct the network device to stop repeatedly transmitting the downlink data, thereby preventing the network device from continuing to repeatedly transmit the downlink data and saving transmission resources of the network device. In response to the terminal receiving the downlink data when the number of receptions reaches the configured number of repetitions, the terminal indicates to the network device that the downlink data has been received, and the network device may determine that the currently configured number of repetitions for the downlink transmission is suitable for the terminal. When the terminal does not successfully receive the downlink data after reaching the configured number of repetitions, the terminal indicates the network device that the downlink data has not been received. The network device may determine that the currently configured number of repetitions for the downlink transmission is insufficient, and may appropriately increase the number of repetitions for the downlink transmission for the terminal.

In an embodiment of the disclosure, the second auxiliary information includes at least one of: an actual received power; or information on a monitored idle frequency band in which a signal quality is greater than a threshold during a first time period, including at least one of a start frequency, an end frequency, a spacing, or a data packet reception status.

It should be noted that, in the embodiment of the disclosure, the second auxiliary information may be reported by the terminal under the trigger of the network device, may be reported by the terminal when certain conditions are met, or may be reported periodically, which may be determined according to actual needs and application scenarios, and is not limited in the embodiment of the disclosure.

An embodiment of the disclosure provides a network device. FIG. 6 is a first schematic structural diagram of a network device provided by an embodiment of the disclosure. As shown in FIG. 6, in the embodiment of the disclosure, the network device includes a processing module 401.

The processing module 401 is configured to: configure a number of repetitions for downlink transmission for a terminal based on first information; and/or adjust a downlink frequency division strategy based on second information. The first information includes satellite beam information and/or first auxiliary information reported by the terminal. The second information includes at least one of: a number of satellite beams, a power limitation requirement, or second auxiliary information reported by the terminal.

In an embodiment of the disclosure, the processing module 401 is configured to: determine N sets of numbers of repetitions based on the satellite beam information and/or the first auxiliary information, N being a natural number greater than or equal to 1, each of the N sets of numbers of repetitions including a number of repetitions for at least one downlink transmission determined by at least one piece of information included in the satellite beam information and/or the first auxiliary information; when N is equal to 1, select a number of repetitions for a downlink transmission from the determined set of numbers of repetitions and configure it for the terminal; or when N is greater than 1, determine an intersection of the N sets of numbers of repetitions; when the intersection is a non-empty set, select a number of repetitions for a downlink transmission from the intersection and configure it for the terminal; when the intersection is an empty set, select a number of repetitions for a next transmission from the N sets of numbers of repetitions and configure it for the terminal.

In an embodiment of the disclosure, the satellite beam information includes at least one of: the number of satellite beams, a transmit power allocated to each satellite beam, or a coverage area of a satellite beam that covers the terminal.

In an embodiment of the disclosure, when the transmit power allocated to each satellite beam is the same, the number of repetitions for the downlink transmission satisfies at least one of the following conditions: positively correlated with a distance from a first beam reference point to a second beam reference point, the first beam reference point being a reference point of the satellite beam that covers the terminal, the second beam reference point being a reference point of a central satellite beam, and the central satellite beam being a satellite beam in a vertical direction of a satellite; positively correlated with the number of satellite beams; or positively correlated with the coverage area of the satellite beam that covers the terminal.

In an embodiment of the disclosure, when the transmit power allocated to at least one satellite beam is different from that allocated to other satellite beams, the number of repetitions for the downlink transmission is negatively correlated with the transmit power of the satellite beam that covers the terminal.

In an embodiment of the disclosure, the first auxiliary information includes at least one of: a communication environment of the terminal, a distance between the terminal and an edge of beam coverage, a terminal capability of the terminal, or an importance level of data expected to be received by the terminal.

In an embodiment of the disclosure, the number of repetitions for the downlink transmission satisfies at least one of the following conditions: negatively correlated with the communication environment of the terminal; negatively correlated with the distance between the terminal and the edge of beam coverage; negatively correlated with the terminal capability of the terminal; or positively correlated with the importance level of the data expected to be received by the terminal.

In an embodiment of the disclosure, the processing module 401 is configured to update the number of repetitions for the downlink transmission for the terminal when a cell corresponding to the terminal changes.

In an embodiment of the disclosure, the processing module 401 is configured to perform at least one of the following operations: updating the number of repetitions for the downlink transmission for the terminal based on a change in a transmit power of a satellite beam that covers the terminal and/or a change in a distance from a central satellite beam before and after a cell change, when a change of a satellite beam under the same satellite causes the cell corresponding to the terminal to change; updating the number of repetitions for the downlink transmission for the terminal based on a change in a satellite orbit height and/or a change in a satellite service area before and after a cell change, when a change of a satellite causes the cell corresponding to the terminal to change; or updating the number of repetitions for the downlink transmission for the terminal based on cell change information reported by the terminal, when a movement of the terminal causes the cell corresponding to the terminal to change.

In an embodiment of the disclosure, the cell change corresponding to the terminal includes a cell handover, and the terminal resides in a first cell before the cell handover and resides in a second cell after the cell handover.

The cell change information includes at least one of: cell identifiers respectively corresponding to the first cell and the second cell; satellite identification information respectively corresponding to the first cell and the second cell; or beam information respectively corresponding to the first cell and the second cell.

In an embodiment of the disclosure, the processing module 401 is configured to configure the number of repetitions for the downlink transmission for the terminal through at least one of: a broadcast message, DCI, RRC signaling, or a MAC control element.

In an embodiment of the disclosure, the processing module 401 is configured to update the number of repetitions for the downlink transmission for the terminal based on at least one of: change information of a satellite beam, including at least one of a change in a moving speed of the satellite beam or a change in a coverage area of the satellite beam; an update request from the terminal; change information of a network node; or service duration information of a satellite and/or the satellite beam.

In an embodiment of the disclosure, the second auxiliary information includes at least one of: an actual received power; or information on a monitored idle frequency band in which a signal quality is greater than a threshold during a first time period, including at least one of a start frequency, an end frequency, a spacing, or a data packet reception status.

In an embodiment of the disclosure, the processing module 401 is configured to configure an effective usage duration corresponding to the number of repetitions for the downlink transmission for the terminal.

FIG. 7 is a second schematic structural diagram of a network device provided by an embodiment of the disclosure. As shown in FIG. 7, in the embodiment of the disclosure, the network device includes: a first processor 501, a first memory 502, and a first communication bus 503.

The first communication bus 503 is configured to implement a communication connection between the first processor 501 and the first memory 502.

The first processor 501 is configured to execute one or more computer programs stored in the first memory 502 to implement the method for controlling downlink transmission applied to the network device.

An embodiment of the disclosure provides a terminal. FIG. 8 is a first schematic structural diagram of a terminal provided by an embodiment of the disclosure. As shown in FIG. 8, in the embodiment of the disclosure, the terminal includes a communication module 601.

The communication module 601 is configured to: receive a number of repetitions for downlink transmission configured by a network device based on first information; and/or report second auxiliary information to the network device for the network device to adjust a downlink frequency division strategy. The first information includes satellite beam information and/or first auxiliary information reported by the terminal.

In an embodiment of the disclosure, the satellite beam information includes at least one of: a number of satellite beams, a transmit power allocated to each satellite beam, or a coverage area of a satellite beam that covers the terminal.

In an embodiment of the disclosure, the first auxiliary information includes at least one of: a communication environment of the terminal, a distance between the terminal and an edge of beam coverage, a terminal capability of the terminal, or an importance level of data expected to be received by the terminal.

In an embodiment of the disclosure, the second auxiliary information includes at least one of: an actual received power; or information on a monitored idle frequency band in which a signal quality is greater than a threshold during a first time period, including at least one of a start frequency, an end frequency, a spacing, or a data packet reception status.

In an embodiment of the disclosure, the communication module 601 is configured to perform at least one of the following operations: transmitting a first response to the network device to instruct the network device to stop repeatedly transmitting downlink data, when the downlink data is received before a number of receptions reaches the configured number of repetitions; transmitting a second response to the network device to indicate to the network device that downlink data has been received, in response to the downlink data being received when a number of receptions reaches the configured number of repetitions; or transmitting a third response to the network device to indicate to the network device that downlink data has not been received, when the downlink data is not successfully received after the configured number of repetitions has been reached.

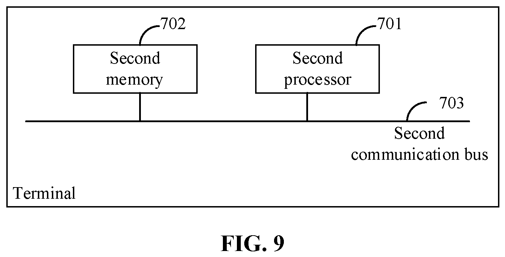

FIG. 9 is a second schematic structural diagram of a terminal provided by an embodiment of the disclosure. As shown in FIG. 9, in the embodiment of the disclosure, the terminal includes: a second processor 701, a second memory 702, and a second communication bus 703.

The second communication bus 703 is configured to implement a communication connection between the second processor 701 and the second memory 702.

The second processor 701 is configured to execute one or more computer programs stored in the second memory 702 to implement the method for controlling downlink transmission applied to the terminal.

An embodiment of the disclosure provides a computer program product, including a computer program that, when executed by a processor, causes the processor to implement operations of the method for controlling downlink transmission applied to the network device or operations of the method for controlling downlink transmission applied to the terminal.

An embodiment of the disclosure provides a computer-readable storage medium in which a computer program is stored, and when the computer program is executed, operations of the method for controlling downlink transmission applied to the network device or operations of the method for controlling downlink transmission applied to the terminal are implemented. The computer-readable storage medium may be a volatile memory, such as a random-access memory (RAM); or a non-volatile memory, such as a read-only memory (ROM), a flash memory, a hard disk drive (HDD), or a solid-state drive (SSD); or may be a respective device including one or any combination of the above-mentioned memories, such as a mobile phone, a computer, a tablet device, a personal digital assistant, or the like.

Those skilled in the art will appreciate that the embodiments of the disclosure may be provided as methods, systems, or computer program products. Accordingly, the disclosure may take the form of a hardware embodiment, a software embodiment, or an embodiment combining software and hardware aspects. Moreover, the disclosure may take the form of a computer program product implemented on one or more computer-usable storage media (including, but not limited to, a magnetic disk storage, an optical storage, and the like) containing computer-usable program codes therein.

The disclosure is described with reference to the schematic flowcharts and/or block diagrams illustrating the implementation of the methods, the devices(systems), and the computer program product according to the embodiments of the disclosure. It should be understood that each process and/or block in the flowcharts and/or block diagrams, and combinations of the processes and/or the blocks in the flowcharts and/or block diagrams may be implemented by computer program instructions. These computer program instructions may be provided to a processor of a general purpose computer, a special purpose computer, an embedded processor, or other programmable data processing devices to produce a machine, such that the instructions executed by the processor of the computer or other programmable data processing devices produce means for implementing the functions specified in one or more processes of the flowchart and/or one or more blocks of the block diagram.

These computer program instructions may also be stored in a computer-readable memory capable of directing a computer or other programmable data processing devices to operate in a particular manner, such that the instructions stored in the computer-readable memory produce an article of manufacture comprising instruction means that implement the functions specified in one or more processes of the flowchart and/or one or more blocks of the block diagram.

These computer program instructions may also be loaded onto a computer or other programmable data processing devices such that a series of operating steps are performed on the computer or other programmable devices to produce computer-implemented processing, whereby the instructions executed on the computer or other programmable devices provide operations for implementing the functions specified in one or more processes of the flowchart and/or one or more blocks of the block diagram.

The above are only specific embodiments of the disclosure, but the scope of protection of the disclosure is not limited thereto, and any changes or substitutions that can be easily conceived by a person skilled in the art within the technical scope disclosed in the disclosure should be covered by the scope of protection of the disclosure. Therefore, the scope of protection of the disclosure shall be subject to the scope of protection of the claims.

## Claims

1. A method for controlling downlink transmission, applied to a network device and comprising:
configuring a number of repetitions for downlink transmission for a terminal based on first information, wherein the first information comprises satellite beam information and/or first auxiliary information reported by the terminal; and/or
adjusting a downlink frequency division strategy based on second information, wherein the second information comprises at least one of: a number of satellite beams, a power limitation requirement, or second auxiliary information reported by the terminal.

2. The method of claim 1, wherein configuring the number of repetitions for the downlink transmission for the terminal based on the first information comprises:
determining N sets of numbers of repetitions based on the satellite beam information and/or the first auxiliary information, N being a natural number greater than or equal to 1, wherein each of the N sets of numbers of repetitions comprises a number of repetitions for at least one downlink transmission determined by at least one piece of information included in the satellite beam information and/or the first auxiliary information;
when N is equal to 1, selecting a number of repetitions for a downlink transmission from the determined set of numbers of repetitions and configuring for the terminal; or,
when N is greater than 1, determining an intersection of the N sets of numbers of repetitions;
when the intersection is a non-empty set, selecting a number of repetitions for a downlink transmission from the intersection and configuring for the terminal; or
when the intersection is an empty set, selecting a number of repetitions for a next transmission from the N sets of numbers of repetitions and configuring for the terminal.

3. The method of claim 1 or 2, wherein the satellite beam information comprises at least one of:
the number of satellite beams;
a transmit power allocated to each satellite beam; or
a coverage area of a satellite beam that covers the terminal.

4. The method of claim 3, wherein when the transmit power allocated to each satellite beam is the same, the number of repetitions for the downlink transmission satisfies at least one of the following conditions:
positively correlated with a distance from a first beam reference point to a second beam reference point, the first beam reference point being a reference point of the satellite beam that covers the terminal, the second beam reference point being a reference point of a central satellite beam, and the central satellite beam being a satellite beam in a vertical direction of a satellite;
positively correlated with the number of satellite beams; or
positively correlated with the coverage area of the satellite beam that covers the terminal.

5. The method of claim 3, wherein
when the transmit power allocated to at least one satellite beam is different from that allocated to other satellite beams, the number of repetitions for the downlink transmission is negatively correlated with a transmit power of the satellite beam that covers the terminal.

6. The method of claim 1 or 2, wherein the first auxiliary information comprises at least one of:
a communication environment of the terminal;
a distance between the terminal and an edge of beam coverage;
a terminal capability of the terminal; or
an importance level of data expected to be received by the terminal.

7. The method of claim 6, wherein the number of repetitions for the downlink transmission satisfies at least one of the following conditions:
negatively correlated with the communication environment of the terminal;
negatively correlated with the distance between the terminal and the edge of beam coverage;
negatively correlated with the terminal capability of the terminal; or
positively correlated with the importance level of the data expected to be received by the terminal.

8. The method of claim 1, further comprising:
updating the number of repetitions for the downlink transmission for the terminal when a cell corresponding to the terminal changes.

9. The method of claim 8, wherein updating the number of repetitions for the downlink transmission for the terminal comprises at least one of:
updating the number of repetitions for the downlink transmission for the terminal based on a change in a transmit power of a satellite beam that covers the terminal and/or a change in a distance from a central satellite beam before and after a cell change, when a change of a satellite beam under the same satellite causes the cell corresponding to the terminal to change;
updating the number of repetitions for the downlink transmission for the terminal based on a change in a satellite orbit height and/or a change in a satellite service area before and after a cell change, when a change of a satellite causes the cell corresponding to the terminal to change; or
updating the number of repetitions for the downlink transmission for the terminal based on cell change information reported by the terminal, when a movement of the terminal causes the cell corresponding to the terminal to change.

10. The method of claim 9, wherein the cell change corresponding to the terminal comprises a cell handover, the terminal resides in a first cell before the cell handover and resides in a second cell after the cell handover, and the cell change information comprises at least one of:
cell identifiers respectively corresponding to the first cell and the second cell;
satellite identification information respectively corresponding to the first cell and the second cell; or
beam information respectively corresponding to the first cell and the second cell.

11. The method of claim 1, wherein the number of repetitions for the downlink transmission is configured for the terminal through at least one of:
a broadcast message;
downlink control information (DCI);
radio resource control (RRC) signaling; or
a media access control (MAC) control element.

12. The method of claim 1, further comprising:
updating the number of repetitions for the downlink transmission for the terminal based on at least one of:
change information of a satellite beam, comprising at least one of a change in a moving speed of the satellite beam or a change in a coverage area of the satellite beam;
an update request from the terminal;
change information of a network node; or
service duration information of a satellite and/or the satellite beam.

13. The method of claim 1, wherein the second auxiliary information comprises at least one of:
an actual received power; or
information on a monitored idle frequency band in which a signal quality is greater than a threshold during a first time period, comprising at least one of a start frequency, an end frequency, a spacing, or a data packet reception status.

14. The method of claim 1, further comprising:
configuring an effective usage duration corresponding to the number of repetitions for the downlink transmission for the terminal.

15. A method for controlling downlink transmission, applied to a terminal and comprising:
receiving a number of repetitions for downlink transmission configured by a network device based on first information, wherein the first information comprises satellite beam information and/or first auxiliary information reported by the terminal; and/or
reporting second auxiliary information to the network device for the network device to adjust a downlink frequency division strategy.

16. The method of claim 15, wherein the satellite beam information comprises at least one of:
a number of satellite beams;
a transmit power allocated to each satellite beam; or
a coverage area of a satellite beam that covers the terminal.

17. The method of claim 15, wherein the first auxiliary information comprises at least one of:
a communication environment of the terminal;
a distance between the terminal and an edge of beam coverage;
a terminal capability of the terminal; or
an importance level of data expected to be received by the terminal.

18. The method of claim 15, wherein the second auxiliary information comprises at least one of:
an actual received power; or
information on a monitored idle frequency band in which a signal quality is greater than a threshold during a first time period, comprising at least one of a start frequency, an end frequency, a spacing, or a data packet reception status.

19. The method of claim 15, further comprising at least one of:
transmitting a first response to the network device to instruct the network device to stop repeatedly transmitting downlink data, when the downlink data is received before a number of receptions reaches the configured number of repetitions;
transmitting a second response to the network device to indicate to the network device that downlink data has been received, in response to the downlink data being received when a number of receptions reaches the configured number of repetitions; or
transmitting a third response to the network device to indicate to the network device that downlink data has not been received, when the downlink data is not successfully received after the configured number of repetitions has been reached.

20. A network device, comprising: a first processor, a first memory, and a first communication bus, wherein
the first communication bus is configured to implement a communication connection between the first processor and the first memory; and
the first processor is configured to execute one or more computer programs stored in the first memory to implement the method for controlling downlink transmission of any one of claims 1 to 14.

21. A terminal, comprising: a second processor, a second memory, and a second communication bus, wherein
the second communication bus is configured to implement a communication connection between the second processor and the second memory; and
the second processor is configured to execute one or more computer programs stored in the second memory to implement the method for controlling downlink transmission of any one of claims 15 to 19.

22. A computer-readable storage medium having stored thereon a computer program that, when executed, implements the method for controlling downlink transmission of any one of claims 1 to 19.

23. A computer program product comprising a computer program that, when executed by a processor, causes the processor to implement the method for controlling downlink transmission of any one of claims 1 to 19.
